# EUROPEAN PATENT APPLICATION

(11) **EP 1 168 486 A1**
(43) Date of publication of application: **02.01.2002**
(21) Application number: 01303343.6
(22) Date of filing: 09.04.2001
(51) Int. Cl.: H01P 11/00, H01P 5/103

(54) **Converter for satellite broadcast reception**

(30) Priority: 20.04.2000 JP 2000126242
(71) Applicant: ALPS ELECTRIC CO., LTD., Ota-ku Tokyo 145 (JP)
(72) Inventor: Ikeda, Tomoki, Otsuka-cho, Ota-ku, Tokyo 145 (JP)
(74) Representative: Kensett, John Hinton

(57) **Abstract**

A converter for satellite broadcast reception superior in productivity and inexpensive with reduced material cost is provided. In this converter, a waveguide (2) is formed by bending a metallic plate and is integrally provided with a holding portion (6) which is positioned outside the waveguide. An insulating portion (8a) of a probe held by the holding portion.

## Description

The present invention relates to a converter for satellite broadcast or communication reception to receive a circularly polarized wave comprising a vertically polarized wave and a horizontally polarized wave.

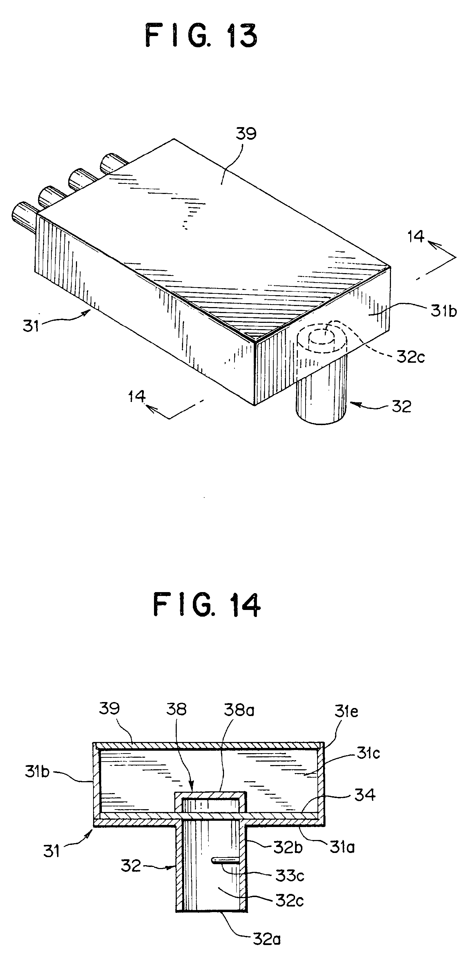

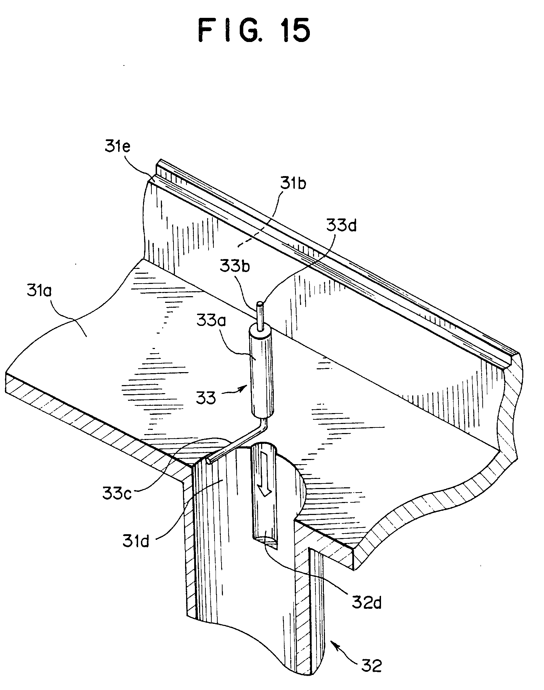

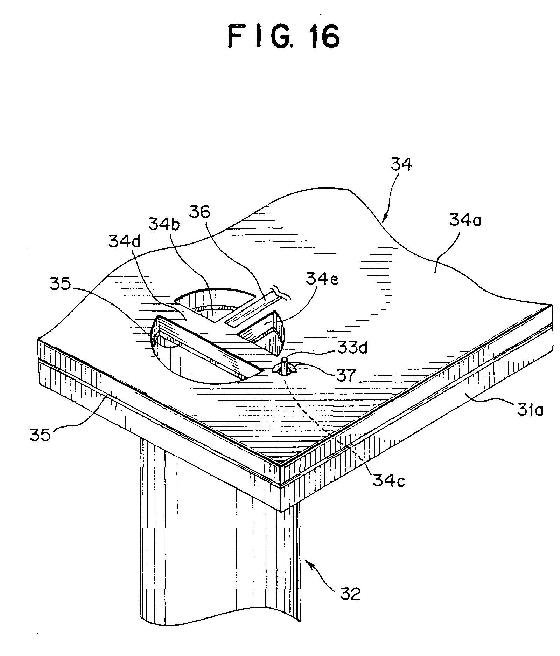

A conventional converter for satellite broadcast reception will be described below with reference to FIGS. 13 to 16, of which FIG. 13 is a perspective view of the conventional converter for satellite broadcast reception, FIG. 14 is a sectional view taken on line 14-14 in FIG. 13, FIG. 15 is an enlarged view of a principal portion, explaining a mounted state of a probe, and FIG. 16 is an enlarged view of a principal portion, showing a mounted state of a circuit board.

A housing 31 and a waveguide 32 are formed integrally using a metallic material such as die-cast aluminum or zinc. The housing 31, which is formed in a generally rectangular box shape, comprises a bottom wall 31a, side walls 31b formed upright so as to enclose the bottom wall 31a while allowing an upper side to be open, a receptacle portion 31c enclosed with the side walls 31b, a vertical through hole 31d formed in a position close to one end portion of the bottom wall 31a, and stepped portions 31e formed by cutting out peripheral edges of upper ends of the side walls 31b. The waveguide 32 is formed in a cylindrical shape relatively small in diameter and is projected from the bottom wall 31a at the position of the through hole 31d. The waveguide 32 comprises a generally cylindrical portion 32b having an opening 32a for introducing a polarized wave, a hollow portion 32c formed centrally in the longitudinal direction of the cylindrical portion, and a holding portion 32d formed as a semi-cylindrical recess within the cylindrical portion 32b, the holding portion 32d extending toward the opening 32a from a peripheral edge position of the through hole 31d formed in the housing 31, as shown in FIG. 15.

A probe 33 for catching a horizontally polarized wave is made up of a cylindrical insulating portion 33a formed of, for example, a fluorine resin, polyethylene, or Teflon, and a linear central conductor 33b piercing through the center of the insulating portion 33a and formed of a metal such as brass or nickel. The central conductor 33b has one end portion 33c which is bent approximately at right angles and an opposite end portion 33d which is rectilinear.

As shown in FIG. 15, the insulating portion 33a of the probe 33 is press-fitted into the holding portion 32d of the waveguide 32 and is thereby mounted to the waveguide. With the probe 33 thus mounted, the opposite end portion 33d of the central conductor 33b is projected to the receptacle portion 31c side of the housing 31, while the bent one end portion 33c is projected up to the center of the hollow portion 32c of the waveguide 32.

As shown in FIG. 16, a single rectangular circuit board 34 formed by an insulating board comprises a thin flat plate portion 34a, three vertical through holes 34b formed near a side edge of the flat plate portion 34a, bridge portions 34d and 34e which are formed in T shape, and a small hole 34c formed near the through hole 34b. A copper-clad earth conductor 35 is formed on a lower surface of the circuit board 34 except the lower surface portion where the bridge portion 34e is formed. A lower surface of the bridge portion 34d functions as a short-circuit rod for the probe 33.

A probe 36 for catching a vertically polarized wave is formed as a conductive pattern on an upper surface of the flat plate portion, extending from an intersecting point of the bridge portions 34d and 34e toward the flat plate portion 34a, and is connected to a circuit pattern (not shown) formed on an upper surface of the flat plate portion 34a. The through hole 31d formed in the housing 31 and the through holes 34b formed in the flat plate portion 34a are opposed to each other and the opposite end portion 33d of the central conductor 33b of the probe 33 is inserted through the hole 34c formed in the flat plate portion 34a. In this state the circuit board 34 of the above configuration placed on the bottom wall 31a of the housing 31 and is fixed by a suitable means. The opposite end portion 33d of the central conductor 33b projected above the circuit board 34 is soldered to a circuit pattern by solder 37.

A short-circuit wall 38 is formed in a box shape using a metal such as die-cast aluminum or zinc and is secured to the circuit board 34 by a desired means, e.g., caulking, so as to cover the through holes 34b formed in the circuit board. A bottom portion 38a of the short-circuit wall 38 functions as a short-circuit portion for the probe 36.

A cover 39, which is constituted by a single rectangular metallic plate, is placed on the stepped portions 31e of the side walls 31b of the housing 31 and is fixed by a suitable means. The receptacle portion 31c of the housing 31 is hermetically sealed and the interior thereof is shielded electrically.

In the conventional converter for satellite broadcast reception, however, since the waveguide 32 and the holding portion 32d are formed integrally by die-casting aluminum for example, the material cost is high and it takes a considerable time for the manufacture, that is, the productivity is poor.

Besides, since the holding portion 32d is formed, the mold used for die casting is complicated and expensive, thus giving rise to the problem that the converter becomes expensive.

Further, it is necessary that the insulating portion 33a of the probe 33 be press-fitted into the holding portion 32d of the waveguide 32; besides, the press-fitting work is performed in the hollow portion 32c which is narrow. Consequently, a considerable time is required for the manufacture, that is, the productivity is poor.

It is an object of the present invention to provide a converter for satellite broadcast reception which is superior in productivity and inexpensive.

According to the first means adopted by the present invention for solving the above-mentioned problems there is provided a converter for satellite broadcast reception, comprising a box-shaped metallic housing, a cylindrical waveguide, and a probe attached to the waveguide, the probe having a cylindrical insulating portion and a central conductor piercing through a central part of the insulating portion, the waveguide being formed by bending a metallic plate and being integrally provided with a holding portion positioned outside the waveguide to hold the insulating portion of the probe.

Preferably, the insulating portion of the probe is held grippingly by both an outer surface of the waveguide and the holding portion.

Preferably, the holding portion is provided with a retaining piece for locking a free end side of the holding portion to the waveguide.

Preferably, the holding portion covers the probe throughout the whole in the longitudinal direction of the insulating portion which is exposed from the waveguide.

Preferably, the holding portion covers the probe throughout the whole in the longitudinal direction of the central conductor which is exposed from the waveguide.

Preferably, the insulating portion with the central conductor installed therein is formed with a slot in the longitudinal direction thereof, and one end portion of the central conductor is bent along the slot.

Preferably, an outer surface of the insulating portion of the probe includes a flat surface, and the probe is held by the holding portion in an abutted state of the flat surface against an outer surface of the waveguide.

Preferably, the flat surface formed as a part of the outer surface of the insulating portion is perpendicular to an extending direction of one end of the central conductor, and the probe is held by the holding portion in an abutted state of the flat surface against the outer surface of the waveguide.

Preferably, an insertion hole for insertion therein of the central conductor is formed in the waveguide, and with the central conductor inserted into the insertion hole, the insulating portion of the probe is placed on the outer surface of the waveguide so as to straddle the insertion hole.

An embodiment of the present invention, will now be described, by way of example only, with reference to the accompanying diagrammatic drawings, in which:
FIG. 1 is an exploded perspective view of a converter for satellite broadcast reception according to the first embodiment of the present invention;
FIG. 2 is an exploded sectional view thereof;
FIG. 3 is an explanatory diagram showing in what state a waveguide is mounted to a circuit board in the converter of the first embodiment;
FIG. 4 is a developed view of semi-finished components, showing how to assemble the converter of the first embodiment;
FIG. 5 is an enlarged view of the circuit board used in the converter of the first embodiment;
FIG. 6 is an explanatory diagram showing in what state a probe is mounted in the converter of the first embodiment;
FIG. 7 is an explanatory diagram showing in what state the probe is mounted in the converter of the first embodiment;
FIG. 8 is a perspective view showing a modified example of a holding member employable in the converter of the first embodiment;
FIG. 9 is a top view thereof;
FIG. 10 is a perspective view of a probe used in a converter for satellite broadcast reception according to the second embodiment of the present invention;
FIG. 11 is a plan view thereof;
FIG. 12 is a perspective view showing in what state the probe is mounted;
FIG. 13 is a perspective view of a conventional converter for satellite broadcast reception;
FIG. 14 is a sectional view taken on line 14-14 in FIG. 13;
FIG. 15 is an enlarged view of a principal portion, showing in what state a probe is mounted in the conventional converter; and
FIG. 16 is an enlarged view of a principal portion, showing in what state a circuit board is mounted in the conventional converter.

### DETAILED DESCRIPTION OF PREFERRED EMBODIMENTS

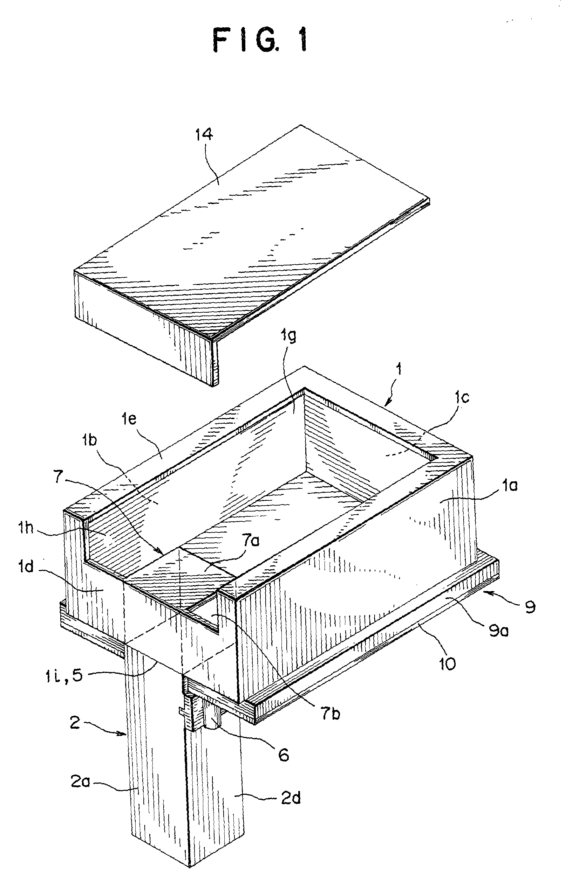

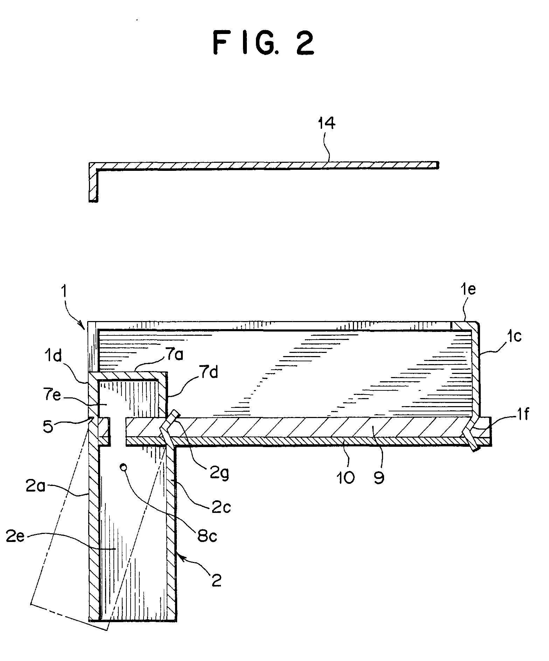

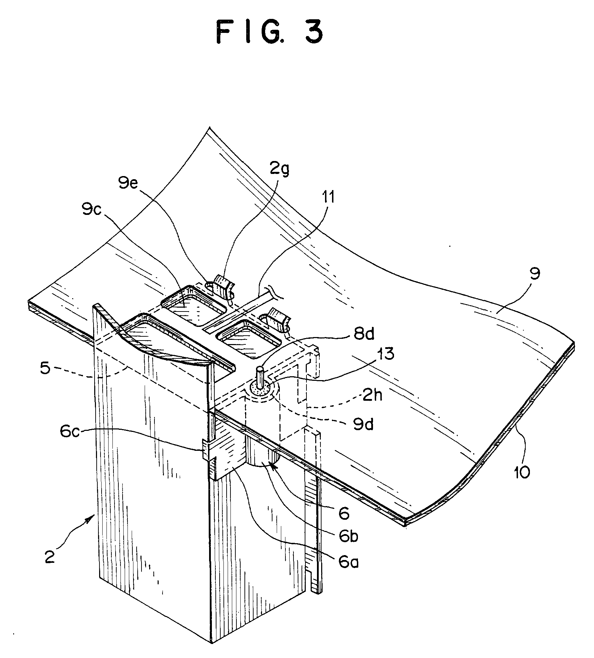

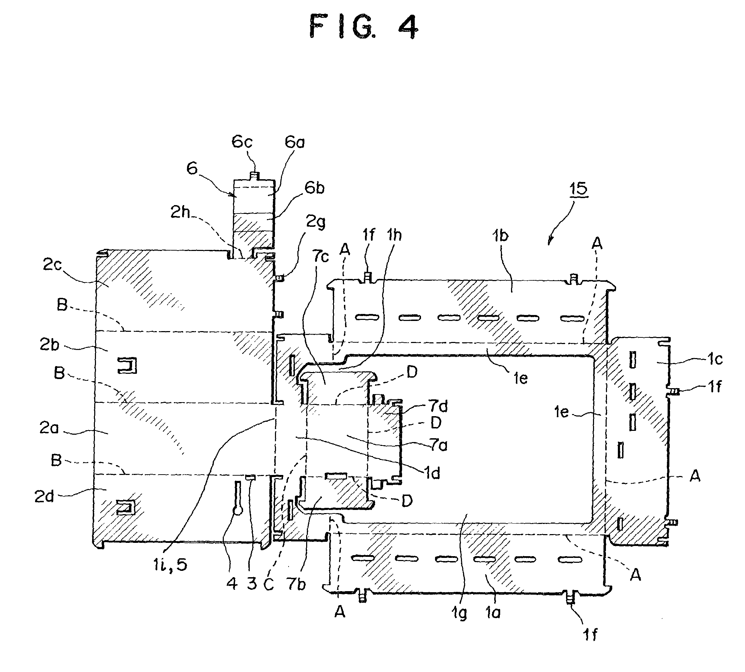

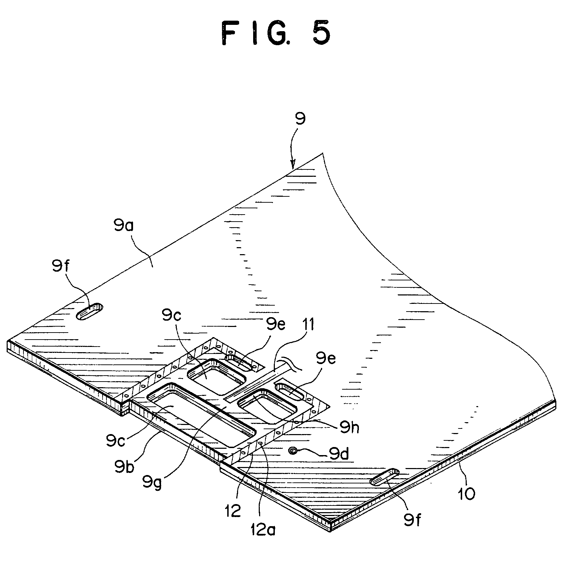

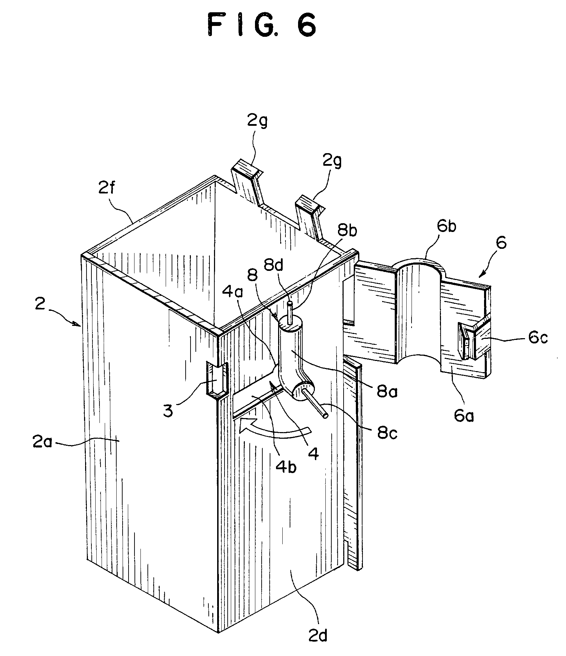

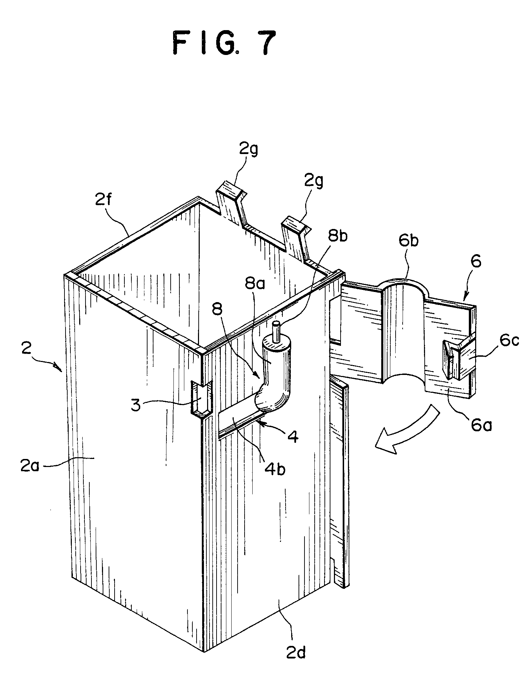

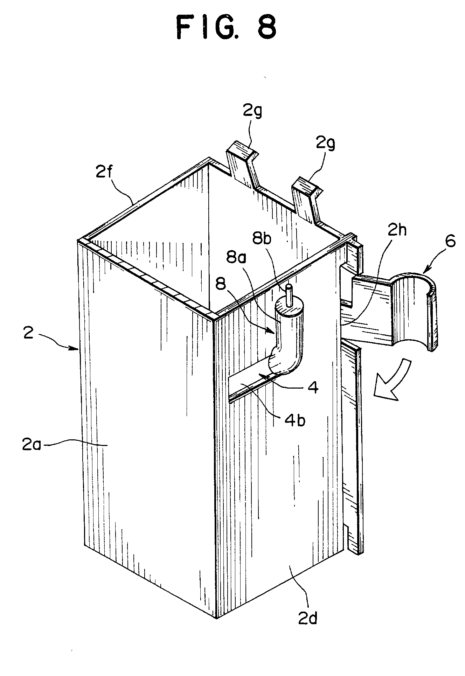

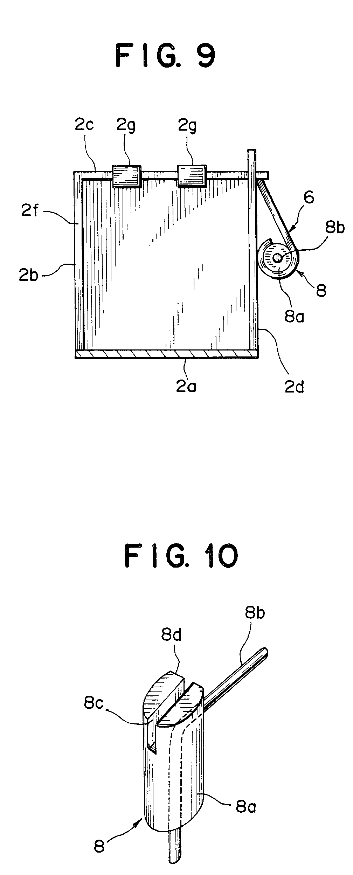

A converter for satellite broadcast reception according to the first embodiment of the present invention will be described below with reference to FIGS. 1 to 9, of which FIG. 1 is an exploded perspective view of the converter, FIG. 2 is an exploded sectional view thereof, FIG. 3 is an explanatory diagram showing in what state a waveguide is mounted to a circuit board, FIG. 4 is a developed view of semi-finished components, showing how to assemble the converter, FIG. 5 is an enlarged view of the circuit board, FIGS. 6 and 7 are explanatory diagrams showing in what state a probe is mounted, FIG. 8 is a perspective view showing a modified example of a holding member, and FIG. 9 is a top view thereof.

As shown in FIGS. 1 to 9, the converter for satellite broadcast reception according to the first embodiment of the present invention comprises a housing 1, a waveguide 2 and a short-circuit wall 7 which are connected together and formed integrally by bending a single thin metallic plate.

The housing 1, which is formed in a box shape using a thin metallic plate, comprises a ⊐-shaped upper wall 1e having a central rectangular hole 1g and a brim portion formed along an outer periphery of the hole 1g, and side walls 1a, 1b, 1c and 1d formed upright by bending the upper wall 1e on the four sides of the upper wall. The side walls 1a to 1d are integrally connected to the upper wall 1e. An upper portion of the side wall 1d opposed to the side wall 1c is formed with a large cutout portion 1h which is contiguous to the hole 1g. Further, as shown in FIG. 4, a plurality of generally <-shaped engaging pieces 1f are formed at a lower end of each of the side walls 1a, 1b and 1c.

The waveguide 2, which is formed in the shape of a rectangular parallelepiped using a thin metallic plate, comprises a side plate portion 2a connected to the side wall 1d of the housing 1 through a connecting portion 1i and extending downward, side plate portions 2b and 2d formed by bending the metallic plate at right angles on both sides of the side plate portion 2a, a side plate portion 2c formed by bending the metallic plate at right angles from the side plate portion 2b, the side plate portion 2c being connected to the side plate portion 2d and opposed to the side plate portion 2a, a hollow portion 2e formed by being enclosed with the side plate portions 2a to 2d, and end portions 2f as free ends of the side plate portions 2b to 2d exclusive of the connecting portion 1i. As shown in FIGS. 2 and 3, two generally <-shaped retaining pieces 2g are formed at the end 2f of the side plate portion 2c opposed to the side plate portion 2a which is connected to the housing 1**.** Further, as shown in FIG. 4, a generally rectangular engaging hole 3 is formed in the boundary between the side plate portions 2a and 2d, and an insertion hole 4 comprising a circular hole 4a and a rectangular hole 4b is formed in the side plate portion 2d at a position close to the engaging hole 3. In the connecting portion 1i between the side plate portion 2a and the side wall 1d of the housing 1 there is formed a bending facilitating means 5 such as a cut-in portion. The waveguide 2, when formed by bending a thin metallic plate, is projected downward vertically from the housing 1, as shown in FIG. 1, and it is tiltable relative to the housing 1, centered on the bending facilitating means 5, as indicated with a dotted line in FIG. 2.

As shown in FIGS. 3 and 4, a holding member 6 is formed so as to be positioned outside the waveguide 2 and it is connected to the side plate portion 2c through a connecting portion 2h. The holding member 6 comprises a flat plate-like base portion 6a, a semi-cylindrical embracing portion 6b formed centrally of the base portion 6a, and a generally <- shaped retaining piece 6c formed by being bent on a free end side of the base portion 6a.

The holding member 6 can be bent from the side plate portion 2c. When the holding member 6 is bent so as to become opposed to the side plate portion 2d, the retaining piece 6c can be engaged with the engaging hole 3.

The short-circuit wall 7, which is formed in a box shape using a thin metallic plate, comprises a lid portion 7a connected to the side wall 1d of the housing 1 and formed by being bent at right angles from the side wall 1d, side portions 7b, 7c and 7d formed by being bent downward on the side opposed to the side wall 1d, and a cavity 7e enclosed with the lid portion 7a, side portions 7b - 7d and side wall 1d.

The short-circuit wall 7 is positioned within the housing 1 so that its cavity 7e is opposed to the hollow portion 2e of the waveguide 2.

As shown in FIG 6, a probe 8 for catching a horizontally polarized wave is made up of a cylindrical L-shaped insulating portion 8a formed of, for example, a fluorine resin, polyethylene or Teflon and a linear central conductor 8b formed mainly using such a metal as brass or nickel and piercing through a central part of the insulating portion 8a. The central conductor 8b has one end portion 8c which is bent at right angles together with the insulating portion 8a and an opposite end portion 8d positioned perpendicularly to the one end portion 8c.

As shown particularly in FIGS. 3 and 7, one end portion of the L-shaped insulating portion 8a of the probe 8 is fitted into the circular hole 4a as a constituent of the insertion hole 4 formed in the side plate portion 2d of the waveguide 2, while the opposite end portion of the insulating portion 8a exposed from the waveguide 2 is held while being gripped by both an outer surface of the side plate portion 2d of the waveguide and the embracing portion 6b of the holding member 6. At this time, the opposite end portion of the insulating portion 8a exposed from the waveguide 2 is covered with the embracing portion 6b of the holding member 6 throughout the whole thereof in its longitudinal direction and so is the central conductor 8b exposed from the waveguide 2.

When the probe 8 is mounted, the opposite end portion 8d of the central conductor 8b projects to the housing 1 side, while the bent one end portion 8c projects to a central part of the hollow portion 2e of the waveguide 2.

As shown in FIG. 5, a rectangular circuit board 9, which is formed by a single insulating board, comprises a thin flat plate portion 9a, a cutout portion 9b formed in one side edge of the flat plate portion 9a, three generally rectangular, vertical through holes 9c formed near the cutout portion 9b, bridge portions 9g and 9h defined in T shape by the through holes 9c, a small hole 9d formed near the through holes 9c, two first engaging holes 9e formed in positions near the through holes 9c and opposed to the cutout portion 9b, and a plurality of second engaging holes 9f formed in marginal positions of the flat plate portion 9a. A copper-clad earth conductor 10 is formed on a lower surface of the flat plate portion 9a throughout the whole of the lower surface exclusive of the bridge portion 9h.

A probe 11 for catching a vertically polarized wave is formed by a conductive pattern on an upper surface of the bridge portion 9h so as to extend from an intersecting point of the bridge portions 9g and 9h up to the flat plate portion 9a of the circuit board 9 and is connected to a wiring pattern (not shown) formed on an upper surface of the flat plate portion 9a. A band-like earth pattern 12 is formed by copper cladding on the upper surface of the flat plate portion 9a so as to surround the through holes 9c and in a connected state with the earth conductor 10 through a plurality of through holes 12a formed through the circuit board 9.

The upper surface of the flat plate portion 9a of the circuit board 9 thus constructed is brought into abutment against lower ends of the side walls 1a - 1d and the circuit board 9 is held grippingly by both the side wall lower ends and the end portions 2f of the waveguide 2 against which a lower surface of the flat plate portion 9a is in abutment. In this state, the retaining pieces 2g of the waveguide 2 and the first engaging holes 9e formed in the circuit board 9 are engaged with each other and the engaging pieces 1f of the housing 1 and the second engaging holes 9f formed in the circuit board are also engaged with each other to effect holding of the circuit board.

In this case, the upper surface of the flat plate portion 9a of the circuit board 9 comes into abutment against lower ends of the side portions 7b - 7d of the short-circuit wall 7 and the side plate portion 2a of the waveguide 2 is fitted in the cutout portion 9b of the flat plate portion 9a.

Further, as shown in FIG. 3, the through holes 9c formed in the circuit board 9 is opposed to the hollow portion 2e of the waveguide 2 and the cavity 7e of the short-circuit wall 7, the side portions 7b - 7d of the short-circuit wall 7 are abutted against the earth pattern 12, and the opposite end portion 8d of the central conductor 8b in the probe 8 is inserted through the hole 9d formed in the flat plate portion 9a. The opposite end portion 8d of the central conductor 8b projecting above the circuit board 9 is soldered by solder 13 and is connected to a wiring pattern formed on the circuit board.

Thus, the through holes 9c formed in the circuit board 9 are positioned inside the waveguide 2 and also inside the short-circuit wall 7 and a lower surface of the circuit board except the through holes 9c is shielded by the earth conductor 10.

An L-shaped cover 14, which is constituted by a single rectangular metallic plate, is fitted in a fitting portion constituted by both side wall 1d and upper wall 1e of the housing 1 and is fixed by a suitable means. In this way the interior of the housing 1 is put in a hermetically sealed and electrically shielded state.

The converter for satellite broadcast reception according to the present invention is constructed as above. Now, a description will be given about how to assemble the converter. First, as shown in FIG. 4, the housing 1 which comprises the upper wall 1e formed with the central hole 1g and the cutout portion 1h and the side walls 1a - 1d extending on all sides from the upper wall 1e, the waveguide 2 which is formed outside the housing 1 and which comprises the side plate portion 2a extending from the side wall 1d, the side plate portions 2b and 2c extending contiguously from one side of the side plate portion 2a, the side plate portion 2d extending from the opposite side of the side plate portion 2a, and the holding portion 6 extending outward from the side plate portion 2c through the connecting portion 2h, and the short-circuit wall 7 which comprises the lid portion 7a extending from the side wall 1d opposedly to the side plate portion 2a and the side portions 7b - 7d extending in three directions from the lid portion 7a, the short-circuit wall 7 spanning both hole 1g and cutout portion 1h of the housing 1, are formed as a semi-finished product 15 by punching a thin metallic plate.

In the semi-finished product 15, by bending the side walls 1a - 1d at right angles in the respective positions indicated with dotted lines A, there is formed the housing 1. Likewise, by bending the side plate portions 2b - 2d at right angles in the respective positions indicated with dotted lines B and connecting the side plate portions 2c and 2d with each other, there is formed the waveguide 2. Further, by bending the lid portion 7a at right angles in the position of a dotted line C and by bending the side portions 7b - 7d in the positions of dotted lines D, there is formed the short-circuit wall 7. As a result, there is formed such an entire shape as shown in FIG. 1.

The following description is now provided about how to install the circuit board 9. As shown in FIG. 2, the waveguide 2 suspended vertically from the housing 1 is tilted outward from the bending facilitating means 5 as indicated with a dotted line, allowing the circuit board 9 to be positioned between the housing and the waveguide, and thereafter the waveguide 2 is restored to its vertical state to pinch the circuit board 9 between the housing 1 and the waveguide 2. This pinching operation is performed by first mounting the circuit board 9 to the underside of the housing 1 while fitting the engaging pieces 1f of the housing 1 into the second engaging holes 9f formed in the circuit board and by subsequently bringing the retaining pieces 2g formed on a free end-side end portion 2f of the waveguide 2 into engagement with the first engaging holes 9e formed in the circuit board 9, as shown in FIG. 3. The circuit board 9 is pinched and held firmly by such engagements.

Next, the probe 8 is fitted in the insertion hole 4 by turning the probe in the direction of arrow from its state shown in FIG. 6 until the one end portion 8c of the central conductor 8b is positioned within the hollow portion 2e and by allowing the insulating portion 8a to be engaged in the circular hole 4a. Next, the holding portion 6 is bent from the connecting portion 2h and the retaining piece 6c formed on a free end side of the holding portion 6 is locked to the engaging hole 3, thereby holding the insulating portion 8a grippingly between the embracing portion 6b and the side plate portion 2d and so holding the probe 8.

Reference will now be made to the operation of the converter for satellite broadcast reception thus formed and assembled according to the present invention. Two polarized waves orthogonal to each other are introduced through the waveguide 2 into the hollow portion 2e of the waveguide. Of the two polarized waves, a horizontally polarized wave is reflected by a part of the earth conductor 10 formed on the back of the bridge portion 9g and is caught by the one end portion 8c of the probe 8 projecting into the hollow portion 2e, while a vertically polarized wave is reflected by the lid portion 7a of the short-circuit wall 7 and is caught by the probe 11 formed on the upper surface of the bridge portion 9h. The horizontally polarized wave caught by the probe 8 is transmitted as a horizontal polarization signal to an electric circuit on the circuit board 9 through the central conductor 8b.

The vertically polarized wave caught by the probe 11 is transmitted as a vertical polarization signal to the electric circuit on the circuit board 9, which circuit in turn combines the polarization signals transmitted from the probes.

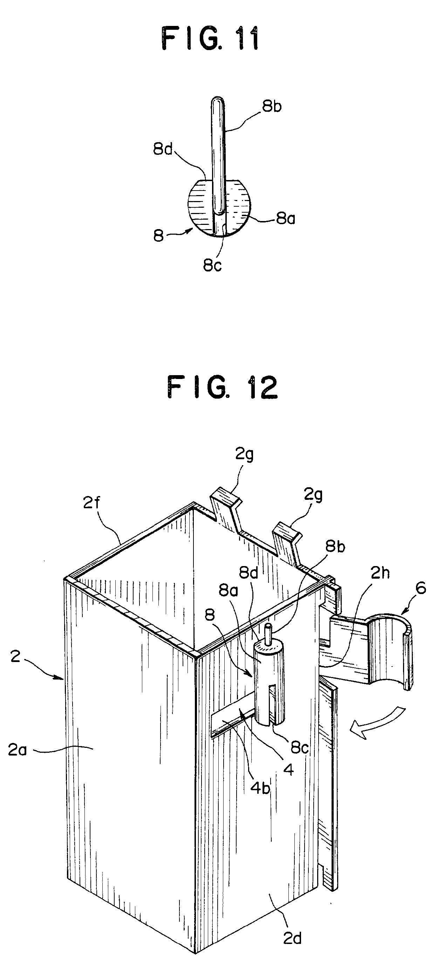

FIGS. 10 to 12 illustrate a converter for satellite broadcast reception according to the second embodiment of the present invention, of which FIG. 10 is a perspective view of a probe used in the converter, FIG. 11 is a plan view thereof, and FIG. 12 is a perspective view showing in what state the probe is mounted in the converter.

Now, with reference to FIGS. 10 to 12, a description will be given about the configuration of the converter for satellite broadcast reception according to the second embodiment. An insulating portion 8a of a probe 8 has a slot 8c formed longitudinally and a flat surface 8d formed on an outer surface of the insulating portion.

A central conductor 8b is press-fitted into the insulating portion 8a and one end thereof is bent at right angles along the slot 8c and is projected outward from the slot. The flat surface 8d is formed at a position perpendicular to the extending direction of the bent one end of the central conductor 8b.

As shown in FIG. 12, in the probe 8 thus constructed, the bent one end of the central conductor 8b is inserted into the insertion hole 4 of the waveguide 2 and the flat surface 8c of the insulating portion 8a is placed on an outer surface of the waveguide 2 in such a manner that the insulating portion 8a straddles the insertion hole 4. In this state, a holding portion 6 is bent to push the insulating portion 8a against the outer surface of the waveguide 2, whereby the probe 8 is mounted.

It goes without saying that the present invention is not limited to the converters for satellite broadcast reception of the above embodiments. As shown in FIG. 8, the holding portion 6 may be in a bent state from the connecting portion 2h, not having a retaining piece, and the insulating portion 8a may be held by such a holding portion. The holding portion 6 may be formed as in FIG. 9, in which the insulating portion 8a is embraced and held substantially throughout the whole circumferential surface thereof by only the holding portion 6.

The bending facilitating means 5 is not limited to such a cut-in portion as referred to in the above embodiments, but it may be perforations.

In the converter for satellite broadcast reception according to the present invention, as set forth above, the waveguide is formed by bending a metallic plate and is integrally provided with a holding portion which is positioned outside the waveguide, and an insulating portion of a probe is held by the holding portion. Therefore, the probe can be held easily by the waveguide and hence it is possible to improve the productivity.

Besides, since the waveguide is constituted by a single thin metallic plate, it is not necessary to use a mold and the material cost is reduced, thus permitting the provision of a less expensive converter for satellite broadcast reception.

Since the insulating portion of the probe is held in a pinched state by both an outer surface of the waveguide and the holding portion, it is possible to hold the probe positively and hence possible to provide a more reliable converter for satellite broadcast reception.

Since the holding portion is provided with a retaining piece for locking a free end side of the holding portion to the waveguide, the probe can be held in a simple and positive manner and the free end of the holding portion can be fixed surely to the waveguide, thus making it possible to provide a converter for satellite broadcast reception with no likelihood of reversion of the holding portion from its bent state.

Since the holding portion covers the probe throughout the whole in the longitudinal direction of the insulating portion exposed from the waveguide, the probe can be held positively and it is possible to provide a highly reliable converter for satellite broadcast reception.

Since the holding portion covers the probe throughout the whole in the longitudinal direction of the central conductor exposed from the waveguide, not only the holding portion functions to shield the probe but also it makes the probe difficult to be deformed against an external force, thus permitting the provision of a converter for satellite broadcast reception which is little deformed.

Since the insulating portion with the central conductor installed therein is formed with a longitudinal slot and one end portion of the central conductor is bent along the slot, bending of the central conductor can be done uniformly and it is possible to provide a converter for satellite broadcast reception which permits an accurate bending.

Since the outer surface of the insulating portion is formed with a flat surface perpendicular to the extending direction of one end of the central conductor and the probe is held by the holding portion in an abutted state of the flat surface against the outer surface of the waveguide, the insulating portion and the central conductor can be installed accurately and it is possible to provide a converter for satellite broadcast reception superior in assemblability.

Since the waveguide is formed with an insertion hole for insertion therein of the central conductor and in an inserted state of the central conductor into the insertion hole the insulating portion is rested on the outer surface of the waveguide so as to straddle the insertion hole, the insulating portion can be stably rested on the outer surface of the waveguide and it is possible to provide a converter for satellite broadcast reception with the probe installed therein firmly.

## Claims

1. A converter for satellite broadcast reception, comprising:
a box-shaped metallic housing;
a cylindrical waveguide; and
a probe attached to said waveguide, said probe having a cylindrical insulating portion and a central conductor piercing through a central part of said insulating portion,
said waveguide being formed by bending a metallic plate and being integrally provided with a holding portion positioned outside the waveguide to hold said insulating portion of said probe.

2. A converter for satellite broadcast reception according to claim 1, wherein said insulating portion of said probe is held grippingly by both an outer surface of said waveguide and said holding portion.

3. A converter for satellite broadcast reception according to claim 1, or 2 wherein said holding portion is provided with a retaining piece for locking a free end side of the holding portion to said waveguide.

4. A converter for satellite broadcast reception according to claim 1, 2 or 3 wherein said holding portion covers said probe throughout the whole in the longitudinal direction of said insulating portion which is exposed from said waveguide.

5. A converter for satellite broadcast reception according to claim 1, 2 or 3 wherein said holding portion covers said probe throughout the whole in the longitudinal direction of said central conductor which is exposed from said waveguide.

6. A converter for satellite broadcast reception according to any preceding claim, wherein said insulating portion with said central conductor installed therein is formed with a slot in the longitudinal direction thereof, and one end portion of the central conductor is bent along said slot.

7. A converter for satellite broadcast reception according to any preceding claim, wherein an outer surface of said insulating portion includes a flat surface, and said probe is held by said holding portion in an abutted state of said flat surface against an outer surface of said waveguide.

8. A converter for satellite broadcast reception according to claim 7, wherein said flat surface formed as a part of the outer surface of said insulating portion is perpendicular to an extending direction of one end of said central conductor, and said probe is held by said holding portion in an abutted state of said flat surface against the outer surface of said waveguide.

9. A converter for satellite broadcast reception according to claim 8, wherein an insertion hole for insertion therein of said central conductor is formed in said waveguide, and with the central conductor inserted into said insertion hole, said insulating portion is placed on the outer surface of the waveguide so as to straddle the insertion hole.
